(19) Europäisches Patentamt
European Patent Office
Office européen des brevets

(11) Veröffentlichungsnummer: **0 061 089**
**B1**

(12) # EUROPÄISCHE PATENTSCHRIFT

(45) Veröffentlichungstag der Patentschrift: **12.06.85**

(51) Int. Cl.4: **G 03 G 5/06**, G 03 G 5/14, C 09 B 5/62

(21) Anmeldenummer: **82102000.5**

(22) Anmeldetag: **12.03.82**

(54) **Elektrophotographisches Aufzeichnungsmaterial.**

(30) Priorität: **20.03.81 DE 3110955**

(43) Veröffentlichungstag der Anmeldung: **29.09.82 Patentblatt 82/39**

(45) Bekanntmachung des Hinweises auf die Patenterteilung: **12.06.85 Patentblatt 85/24**

(84) Benannte Vertragsstaaten: **BE CH DE FR GB IT LI NL**

(56) Entgegenhaltungen:
**EP-A-0 046 164**
**DE-A-1 807 729**
**DE-A-2 237 539**
**US-A-3 904 407**

(73) Patentinhaber: **BASF Aktiengesellschaft, Carl-Bosch-Strasse 38, D-6700 Ludwigshafen (DE)**

(72) Erfinder: **Graser, Fritz, Dr., Blieskasteler Strasse 17, D-6700 Ludwigshafen (DE)**
Erfinder: **Hoffmann, Gerhard, Dr., Pappelstrasse 22, D-6701 Otterstadt (DE)**
Erfinder: **Leyrer, Reinhold J., Dr., Menzelstrasse 4, D-6700 Ludwigshafen (DE)**
Erfinder: **Neumann, Peter, Dr., Franz-Schubert-Strasse 1, D-6908 Wiesloch (DE)**

**EP 0 061 089 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein elektrophotographisches Aufzeichnungsmaterial bestehend aus einem elektrisch leitfähigen Trägermaterial und einer photohalbleitenden Doppelschicht aus organischen Materialien sowie ihre Verwendung für reprographische Zwecke.

Elektrophotographische Aufzeichnungsmaterialien bestehen entweder aus einer homogenen Schicht eines Photohalbleiters auf einem elektrisch leitfähigen Trägermaterial oder aus mehreren, übereinander angeordneten Schichten auf einem Träger. Aufzeichnungsmaterialien mit dieser mehrschichtigen sogenannten Kompositstruktur sind aufgebaut aus einem leitfähigen Träger, einer ersten Schicht, die Ladungsträger erzeugende Verbindungen enthält und einer darüber angeordneten zweiten Schicht mit Ladungsträger transportierenden Stoffen. Solche Kompositstrukturen sind u.a. in der DE-OS 22 20 408 beschrieben. In der DE-OS 22 37 539 werden entsprechende elektrophotographische Elemente offenbart, welche in der ersten Schicht als Ladungsträger erzeugende Verbindungen, Farbstoffe der allgemeinen Formel I enthalten

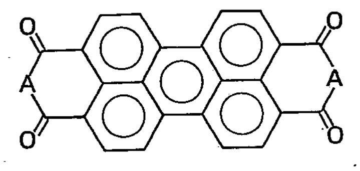

(I),

wobei A sowohl Sauerstoff als auch N-R mit R gleich Wasserstoffatom, Alkyl- oder Alkylphenylgruppen bedeuten kann. Diese Verbindungen werden bevorzugt auf den leitfähigen Träger im Hochvakuum bei Temperaturen über 300°C aufgedampft. Es handelt sich um rote Pigmente. Als Ladungsträger transportierende Verbindungen werden dabei z.B. Oxadiazolverbindungen bevorzugt.

Verbindungen der Formel (I), bei denen A eine N-R-Gruppe und R gleich Chlorphenyl oder Methoxyphenyl bedeutet, wurden gemäss der US-PS 3 904 407 ebenfalls bereits als Ladungsträger erzeugende Farbstoffe eingesetzt. Auch diese Verbindungen haben jedoch den Nachteil, dass sie durch Aufdampfen auf den Träger aufgebracht werden.

Es war Aufgabe der vorliegenden Erfindung, hochlichtempfindliche elektrophotographische, organische Photohalbleiter enthaltende Aufzeichnungsmaterialien bereitzustellen, die möglichst einfach aus einer Farbstoffdispersion hergestellt werden können. Das elektrophotographische Element sollte weiterhin biegsam, elastisch und abriebfest sein.

Die Lösung der Aufgabe geht von einem elektrophotographischen Aufzeichnungsmaterial aus, das sich

a) aus einem elektrisch leitfähigen Trägermaterial,
b) einer ersten Schicht, die Ladungsträger erzeugende Farbstoffe bestimmter Art enthält, gegebenenfalls in Kombination mit einem Bindemittel, mit einer Dicke von 0,005 bis 5 $\mu$m und
c) einer zweiten, für das aktinische Licht weitgehend transparenten Schicht aus isolierenden organischen Materialien mit mindestens einer, im Licht Ladungen transportierenden Verbindung und gegebenenfalls einem oder mehreren aktiven oder inaktiven Bindemitteln zusammensetzt. Die transparente Schicht weist in der bevorzugten Ausführungsform eine Dicke von etwa 2 bis 40 $\mu$m auf.

Gegebenenfalls können Haft- und Sperrschichten zwischen den einzelnen Komponenten a), b) und c) eingebaut werden.

Bei der Überprüfung der bekannten Farbstoffe der allgemeinen Formel II

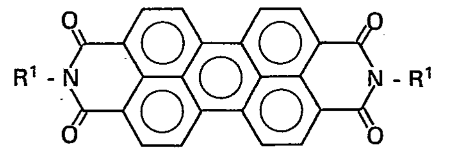

(II),

mit

$R^1$ = Wasserstoff, Alkyl mit bis zu 6 C-Atomen, $\beta$- oder $\gamma$-Hydroxyalkyl, $\beta$- oder $\gamma$-Alkoxyalkyl, Pyrazolyl, Imidazolyl sowie Derivate davon, und vorzugsweise Phenyl mit ein bis drei symmetrisch oder unsymmetrisch angeordneten Substituenten, also der allgemeinen Formel III:

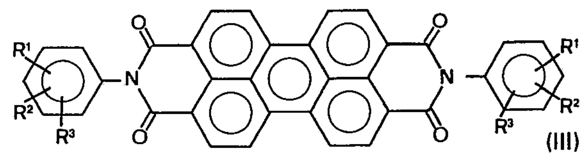

(III)

mit

$R^1$, $R^2$, $R^3$, die gleich oder verschieden sein können, gleich Wasserstoff, Methyl, Äthyl, Propyl, Isopropyl, t-Butyl, Methoxy, Äthoxy, Butoxy, Chlor, Brom, Carboxy, Carboxymethyl, Phenylsulfon, Phenylazo, sowie weitere ähnliche Reste,

wurde nun überraschenderweise gefunden, dass die Verbindung der Formel IV, die mit der Formel der Verbindung 1 übereinstimmt,

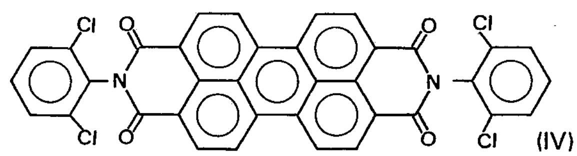

(IV)

also N,N'-Bis(2',6'-dichlorphenyl)-perylen-3,4,9-10-tetracarbonsäurediimid,

als bei aktinischer Belichtung ladungsträgererzeugende Verbindung in der ersten Schicht besonders gute elektrophotographische Aufzeichnungsmaterialien ergibt.

Gegenstand der Erfindung ist demnach ein elektrophotographischer Aufzeichnungsträger, bei dem in der ersten Schicht als Ladungsträger erzeugende Komponente der Farbstoff (IV) wirksam ist.

Der Farbstoff kann in an sich bekannter Weise durch Kondensation von Perylen-3,4,9,10-tetracarbonsäure oder deren Anhydrid mit 2,6-Dichloranilin in Lösungs- oder Verdünnungsmitteln, wie Chinolin, Naphthalin oder Trichlorbenzol oder in einem grossen Überschuss der Anilinverbindung bei Temperaturen zwischen 180 und 230°C hergestellt werden.

Die Umsetzung führt man zweckmässigerweise in Gegenwart von Mitteln durch, welche die Kondensation beschleunigen, z.B. von Zinkchlorid, Zinkacetat, Zinkpropionat oder Salzsäure.

Gemäss der Erfindung wird erreicht, dass eine hochempfindliche, photoleitfähige Doppelschicht für das erfindungsgemässe elektrophotographische Aufzeichnungsmaterial erhalten wird, die eine hohe mechanische Stabilität aufweist und sowohl auf einer zylindrischen Trommel angeordnet werden oder als endloses Band umlaufen kann, ohne besondere Verschleisserscheinungen zu zeigen, und demgemäss für die Verwendung in elektrophotographischen Kopiergeräten sehr geeignet ist. Insbesondere an der Geschwindigkeit des lichtinduzierten Potentialabfalls werden die herausragenden Eigenschaften der Verbindung IV gemäss der Erfindung deutlich. Dass dieses Ergebnis überraschend und nicht naheliegend war, wird vor allem im Vergleich mit Verbindungen, welche das allgemeine Eigenschaftsniveau der N,N'-substituierten Perylen-3,4,9,10-tetracarbonsäurediimide aufweisen, deutlich.

Zur Herstellung der erfindungsgemässen elektrophotographischen Aufzeichnungsmaterialien wird die erste, Ladungsträger erzeugende Schicht in Form einer Dispersion auf den elektrisch leitfähigen Schichtträger aufgebracht. Die Herstellung der Dispersion für die erste Schicht erfolgt durch gemeinsames Rollen von etwa 20 bis 85 Gew.-% des Feststoffgehalts der Dispersion an einem oder mehreren der erfindungsgemäss geeigneten Farbstoffe und 80 bis 15 Gew.-% an einem hierfür üblichen Bindemittel, das gegebenenfalls Sperrschichteigenschaften aufweisen kann, in Form einer Lösung in einem organischen, leicht verdampfbaren Lösungsmittel.

Die erste Schicht wird in einer Dicke von etwa 0,005 bis 5 $\mu$m, vorzugsweise 0,08 bis 1,3 $\mu$m gegossen, wobei hierunter die Feststoffschichtdicke verstanden werden soll. Zwischen dem Träger und der ersten Schicht kann eine Haftschicht in einer Dicke von etwa 0,05 bis 5 $\mu$m, vorzugsweise 0,1 bis 0,8 $\mu$m angeordnet werden.

Über der ersten Schicht wird die transparente zweite Schicht ebenfalls durch Giessen aus einer Lösung angeordnet. Die Dicke der zweiten Schicht liegt vorzugsweise zwischen 2 und 40 $\mu$m. Sie setzt sich aus 30 bis 60 Gew.-% einer oder mehrerer ladungsträgertransportierenden Verbindungen, 65 bis 35 Gew.-% an einem oder mehreren hierfür üblichen Bindemitteln, 0,1 bis 4 Gew.-% an Zusätzen, die die mechanischen Eigenschaften verbessern und gegebenenfalls bis zu 5 Gew.-% an sensibilisierenden oder aktivierenden Verbindungen zusammen. Der Giessprozess erfolgt aus einem niedrigsiedenden Lösungsmittel.

Zwischen der ersten und der zweiten Schicht ist gegebenenfalls eine Sperrschicht von etwa 0,05 bis 1,5 $\mu$m, vorzugsweise 0,1 bis 0,5 $\mu$m angeordnet, während es je nach vorgesehener Verwendung des elektrophotographischen Aufzeichnungsmaterials angemessen sein kann, eine als Deck- und Schutzschicht wirkende inaktive Schicht auf die Ladungsträger transportierende Schicht aufzubringen.

Als elektrisch leitfähiges Trägermaterial sind Aluminiumfolien, Aluminiumbleche, Nickelbleche, oder mit Aluminium, Zinn, Blei, Wismut oder ähnlichen Metallen bedampfte Kunststoffolien, vorzugsweise Polyesterfolien geeignet. Die Auswahl wird durch das Einsatzgebiet des elektrophotographischen Elements bestimmt.

Die Sperrschichten zwischen dem leitfähigen Trägermaterial und der ersten Schicht oder zwischen derselben und der zweiten Schicht bestehen üblicherweise aus Metalloxidschichten, z.B. Aluminiumoxidschichten, Polymeren, wie z.B. Polyamid, Polyvinylalkohol, Polyacrylate, Polystyrol oder ähnliche Systeme. Gegebenenfalls kann aber auch das Bindemittel der ersten Schicht gleichzeitig als Sperrschichtmaterial dienen.

Zur Herstellung der Ladungsträger erzeugenden Schicht der erfindungsgemässen elektrophotographischen Aufzeichnungsmaterialien sind Polyacrylate, Polymethacrylate, Polyester, Polyphthalsäureester, Polyvinylchloride, Styrol-Maleinsäure-Copolymerisate, Epoxide und andere allgemein übliche Harze als Bindemittel für die Aufnahme der Farbstoffe gemäss der Erfindung geeignet.

Für die zweite, die Ladungsträger transportierende Schicht eignen sich als Bindemittel besonders Polyvinylchlorid, Polyesterharze, Polyacetalharze, Polycarbonate, Polystyrol, Polyurethane, d.h. solche Bindemittel, welche speziell elektrische Eigenschaften zeigen und dem Fachmann hierfür bekannt sind. So bieten sich auch Silikonharze, Polyvinylacetat, Chlorkautschuk, Celluloseester, Äthylcellulose und ähnliche an. Als Ladungsträger transportierende Verbindungen, welche in dieser Schicht enthalten sind, eignen sich solche die Transparenz für das sichtbare Licht nicht beeinträchtigende Verbindungen, wie

a) niedermolekulare Verbindungen, insbesondere heterocyclische Verbindungen, wie Pyrazolinderivate, Oxazole, Oxadiazole, Phenylhydrazone, Imidazole, Triphenylaminderivate, Carbazolderivate, Pyrenderivate und weitere, kondensierte Aromaten sowie
b) polymere Materialien, wie Polyvinylpyrene, Poly(N-vinylcarbazol), Copolymerisate aus Carbazol und Styrol, bzw. Vinylacetat und/oder Vinylchlorid.

Vom polymeren Typ ist besonders Poly(N-vinylcarbazol) geeignet.

Die erfindungsgemässen elektrophotographischen Aufzeichnungsmaterialien können noch weitere Bestandteile zur Verbesserung ihrer mechanischen Eigenschaften enthalten. So können Netzmittel, wie die Silikonöle die Oberflächenqualität verbessern. Weiter können zusätzlich Sensibilisatoren oder Aktivatoren der oberen zweiten Schicht einverleibt werden. Als Sensibilisatoren, die in disperser Form gelöst werden können, sind z.B. Triphenylmethanfarbstoffe, Xanthonfarbstoffe, lösliche Perylenderivate, wie Perylentetracarbonsäureester und eine Reihe weiterer Verbindungen bekannt. Als Aktivatoren dienen Verbindungen mit hoher Elektronenaffinität, z.B. Nitroverbindungen, wie 2,4,7-Trinitrofluorenon-9.

Die Erfindung sei anhand des Beispiels 1 im Vergleich zu anderen ähnlichen N,N'-substituierten

Perylen-3,4,9,10-tetracarbonsäurediimiden erläutert.

*Beispiel 1*

Es werden 5 g des Farbstoffs 1 mit 3 g eines Copolymerisats aus Vinylchlorid, Acrylsäure und einem Maleinsäurediester und 25 g Tetrahydrofuran vermischt und für 12 Stunden auf einem Walzenstuhl gerollt. Danach werden 75 g Tetrahydrofuran und 25 g Toluol zugesetzt. Das Gemisch wird eine Stunde lang auf dem Walzenstuhl homogenisiert.

Diese Dispersion wird dann mit einer Rakel auf ein unbehandeltes Aluminiumträgerblech von 175 µm Stärke aufgetragen. Der Giessspalt beträgt 60 µm. Die Rakel wird mit einer Geschwindigkeit von 260 mm/min abgezogen. Nach dem Ablüften und Trocknen für 30 Minuten bei 90°C verbleibt eine Trockenschichtdicke von 0,75 bis 0,8 µm.

Auf diese erste, deckende Schicht wird eine Lösung aus 47,75 g Poly(N-vinylcarbazol), 5,2 g Phthalsäuredihexyl-ester und 5,75 g eines Polycarbonats mit einer Schmelztemperatur von 220 bis 230°C in einem Lösungsmittelgemisch aus 287,5 g Tetrahydrofuran und 74,25 g Toluol aufgetragen. Der Giessspalt beträgt jeweils 140 µm; die Rakel wird mit 260 mm/min abgezogen. Nach der Ablüftung und der Trocknung für 30 Minuten bei 90°C verbleibt eine Trockenschicht von 8 bis 8,5 µm Dicke.

Das so bereitete elektrophotographische Aufzeichnungsmaterial wird dann mit einer solchen Hochspannung an einem Coronadraht in einem Abstand von 10 mm über der Schichtoberfläche beladen, dass bei allen elektrophotographischen Aufzeichnungsmaterialien ein gleichhohes Oberflächenpotential erreicht wird. Nach 20 Sekunden im Dunkeln wird das elektrophotographische Element eine Sekunde lang mit dem Licht einer Xenonlampe von 150 Watt Leistungsaufnahme bestrahlt. Der lichtinduzierte prozentuale Potentialabfall, bezogen auf das Potential nach dem Dunkelabfall, wird gemessen. Weiterhin wird die Geschwindigkeit des lichtinduzierten Potentialabfalls in Volt pro Sekunde ermittelt.

Die Messergebnisse sind in der Tabelle zusammengestellt.

*Verbindung 1*

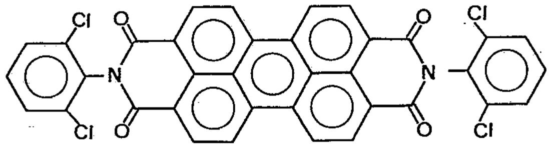

*Vergleichsversuche 1 bis 17*

Es wird wie in Beispiel 1 beschrieben verfahren, jedoch werden als Farbstoffe die Verbindungen 2 bis 18 eingesetzt. Die Messergebnisse sind in der Tabelle zusammengestellt.

*Tabelle*

| Verbindung | lichtinduzierter Potentialabfall in % | Geschwindigkeit des Potentialabfalls bei Belichtung in Volt pro s |
|---|---|---|
| 1 | 96,6 | 10 450 |
| 2 | 77,6 | 2 680 |
| 3 | 92,5 | 6 930 |
| 4 | 90,6 | 7 120 |
| 5 | 87,2 | 6 420 |
| 6 | 88,0 | 5 750 |
| 7 | 91,5 | 4 100 |
| 8 | 78,3 | 3 950 |
| 9 | 90,0 | 6 470 |
| 10 | 45,2 | 710 |
| 11 | 85,0 | 3 770 |
| 12 | 88,6 | 3 300 |
| 13 | 70,8 | 3 860 |
| 14 | 50,3 | 1 050 |
| 15 | 23,4 | 340 |
| 16 | 75,7 | 2 540 |
| 17 | 87,1 | 3 410 |
| 18 | 86,5 | 3 830 |

*Verbindung 2*

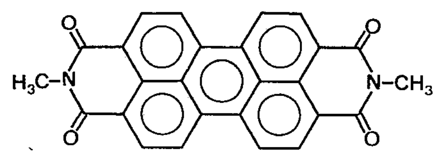

*Verbindung 3*

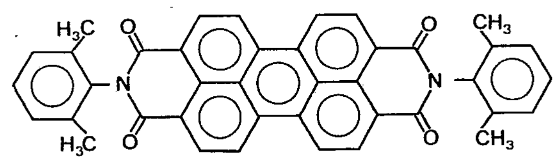

*Verbindung 4*

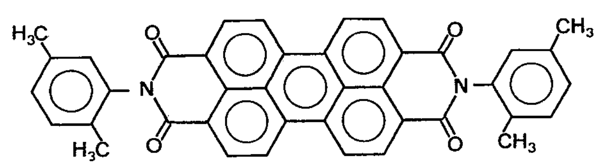

*Verbindung 5*

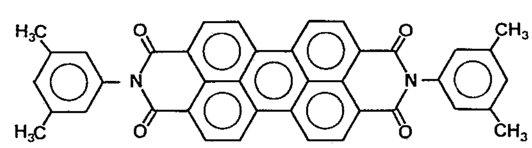

*Verbindung 6*

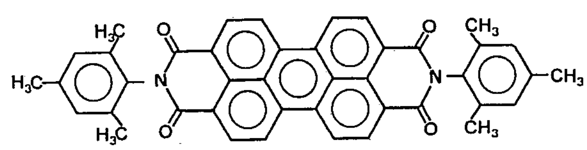

*Verbindung 7*

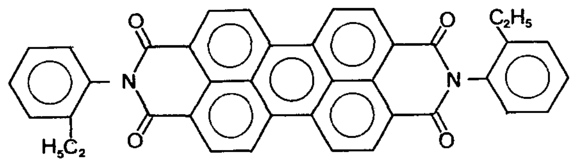

*Verbindung 8*

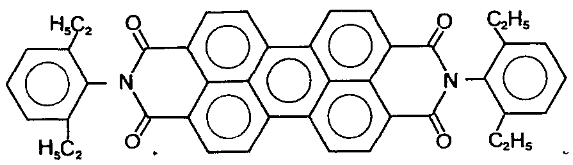

*Verbindung 9*

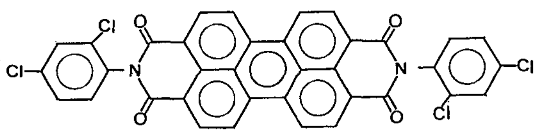

*Verbindung 10*

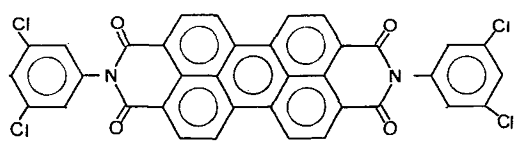

*Verbindung 11*

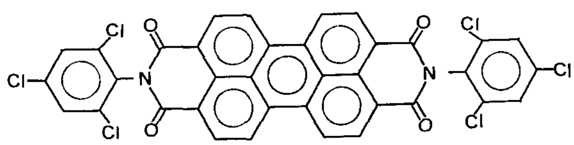

*Verbindung 12*

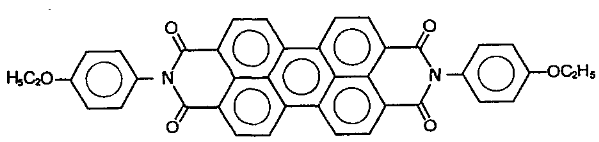

*Verbindung 13*

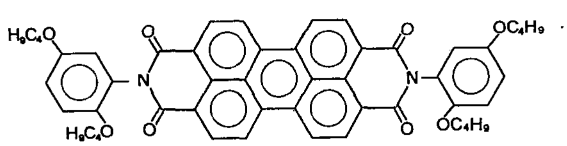

*Verbindung 14*

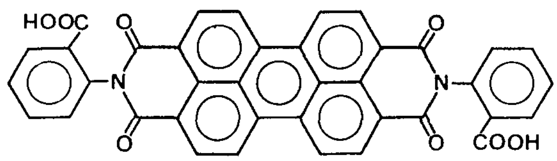

*Verbindung 15*

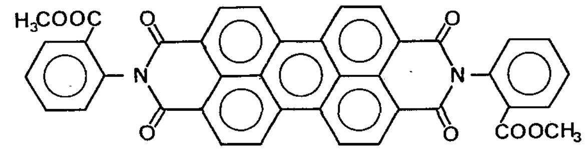

*Verbindung 16*

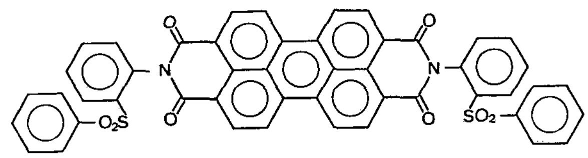

*Verbindung 17*

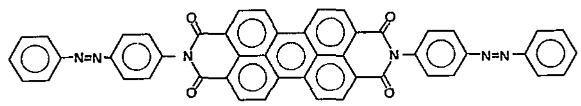

*Verbindung 18*

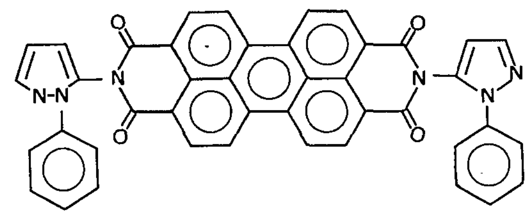

**Patentansprüche**

1. Elektrophotographisches Aufzeichnungsmaterial, im wesentlichen bestehend aus einem elektrisch leitfähigen Trägermaterial, einer ersten N,N'-Bis-(substituiertesphenyl)-perylen-3,4,9,10-tetracarbonsäurediimid als Ladungsträger erzeugende Farbstoffe enthaltenden Schicht und einer zweiten, für das aktinische Licht weitgehend transparenten Schicht aus isolierenden organischen Materialien mit mindestens einer, im Licht Ladungen transportierenden Verbindung, dadurch gekennzeichnet, dass als Ladungsträger erzeugender Farbstoff N,N'-Bis-(2',6'-dichlorphenyl)-perylen-3,4,9,10-tetracarbonsäurediimid eingesetzt wird.

2. Elektrophotographisches Aufzeichnungsmaterial gemäss Anspruch 1, dadurch gekennzeichnet, dass als Ladungsträger transportierende Verbindung Poly-(N-vinylcarbazol) eingesetzt wird.

3. Verwendung der elektrophotographischen Aufzeichnungsmaterialien gemäss Anspruch 1 und 2 für reprographische Zwecke.

**Claims**

1. An electrophotographic recording material which consists essentially of an electrically conductive base, a first layer containing N,N'-bis-(substituted phenyl)-perylene-3,4,9,10-tetracarboxylic

acid diimide as charge carrier-producing dye, and a second layer which is substantially transparent to actinic light and is composed of an insulating organic material containing at least one compound which is charge carrier-transporting when exposed to light, wherein perylene-3,4,9,10-tetracarboxylic acid N,N'-bis-(2',6'-dichlorophenyl)-diimide is employed as the charge carrier-producing dye.

2. An electrophotographic recording material as claimed in claim 1, wherein poly-(N-vinylcarbazole) is employed as the charge carrier-transporting compound.

3. The use of an electrophotographic recording material as claimed in claims 1 and 2 for reprographic purposes.

**Revendications**

1. Matériau d'enregistrement électrophotographique, constitué essentiellement d'un matériau support électriquement conducteur, d'une première couche contenant, comme colorants formant support de charge, du diimide d'acide N,N'-bis-(phényle substituée)-pérylen-3,4,9,10-tétracarboxylique, et d'une deuxième couche, largement transparente à la lumière actinique, en matériaux organiques, isolants ayant au moins un composé transportant des charges à la lumière, caractérisé par le fait que l'on utilise, comme colorant formant support de charge, du diimide d'acide N,N'-bis-(2',6'-dichlorophényle)-pérylen-3,4,9,10-tétracarboxylique.

2. Matériau d'enregistrement électrophotographique, selon la revendication 1, caractérisé par le fait que l'on utilise, comme composé transportant des supports de charge, du poly-(N-vinylcarbazole).

3. Utilisation des matériaux d'enregistrement électrophotographiques, selon les revendications 1 et 2, en reprographie.